# EUROPEAN PATENT APPLICATION

(11) **EP 4 759 604 A1**
(43) Date of publication of application: **17.06.2026**
(21) Application number: 25215565.0
(22) Date of filing: 13.11.2025
(51) Int. Cl.: B60L 1/00, B60L 50/16, B60L 53/14, B60L 53/20, B60L 55/00

(54) **VEHICLE-2-LOAD (V2L) EPOWER USING BI-DIRECTIONAL ON-BOARD CHARGER (OBC)**

(30) Priority: 16.12.2024 US 202418981951
(71) Applicant: International Truck Intellectual Property Company, LLC, Lisle, IL 60532 (US)
(72) Inventor: CHIS, Tudor, Troy, MI, 48085 (US); YU, Wentao, Rochester Hills, MI, 48306 (US)
(74) Representative: Kuhnen & Wacker Patent- und Rechtsanwaltsbüro PartG mbB

(57) **Abstract**

A vehicle includes a high-voltage (HV) electric battery, a charging port configured to receive a first alternating current (AC) power from an external AC power source to charge the HV electric battery; an electrical outlet configured to supply electrical power to an external device; and an on-board charger (OBC) electrically coupled to the electrical outlet, the HV electric battery and the charging port. The OBC has a converter configured to convert the first AC power received from the external AC power source into a first DC power and to supply the first DC power to the HV electric battery; and an inverter configured to receive a second DC power from the HV electric battery and to convert the second DC power into a second AC power that is supplied to the external device when the external device is electrically connected to the electrical outlet.

## Description

### FIELD OF THE INVENTION

The present disclosure relates generally to electric vehicles (EVs), and more particularly to a system of vehicle-2-load (V2L) electric power (ePower) using a bi-directional on-board-charger (OBC).

### BACKGROUND

Typically, drivers and operators of work vehicles use very high power tools or equipment, such as tools for welding, cutting and drilling, air compressors, saws, etc. EV work vehicles do not offer alternating current (AC) outlets that provide high power output such as 5 kilowatts (kW) or above. Current techniques for providing power for such tools and equipment include using an AC outlet to directly connect electric tools, on-site generators or standalone self-contained equipment that provides both the functionality of the tool (e.g., air compressor) as well as a self-contained generator and battery all-in-one. Unfortunately, these self-contained standalone units are extremely expensive and require refueling. There is a need to provide improved techniques for supplying power to high power electric tools and equipment.

### BRIEF SUMMARY OF THE DISCLOSURE

According to an aspect of the present disclosure, a vehicle is provided. The vehicle includes an electric motor that moves the vehicle; a high-voltage (HV) electric battery supplying power to the electric motor to move the vehicle; a charging port configured to receive a first AC power from an external AC power source to charge the HV electric battery via a charging cable; an electrical outlet configured to supply electrical power to an external device; and an on-board charger (OBC) electrically coupled to the electrical outlet, the HV electric battery and the charging port. The OBC includes a converter configured to convert the first AC power received from the external AC power source into a first DC power and to supply the first DC power to the HV electric battery; and an inverter configured to receive a second DC power from the HV electric battery and to convert the second DC power into a second AC power that is supplied to the external device when the external device is electrically connected to the electrical outlet.

In an embodiment of the aspect, the OBC is bi-directional. In an embodiment of the aspect, the converter comprises a power factor correction (PFC) circuit that is single-phase and three-phase compatible and an inductor-inductor-capacitor (LLC) resonant converter configured to stabilize an output voltage of the PFC circuit based on a voltage requirement of the HV electric battery. In an embodiment of the aspect, the external device is electrically connected to the electrical outlet by being plugged into a receptacle at the electrical outlet and the receptacle is affixed to the vehicle. In an embodiment of the aspect, the vehicle further includes a user interface, and a controller electrically coupled to the OBC. In an embodiment of the aspect, the controller is configured to switch between a single-phase charge and a three-phase charge based on a user-input from the user interface.

In another embodiment of the aspect, the controller is configured to automatically stop charging the electrical device when the HV electric battery is at or below a predetermined power threshold that is based on a user-input from the user interface. In another embodiment of the aspect, the controller is configured to enable and disable the inverter based on a user-input from the user interface. In another embodiment of the aspect, the electrical outlet is configured to output: up to 80 Amps per phase for a 120 V_{ac} single-phase; 240 V_{ac} for a split-phase; and up to 32 Amps per phase for a 208 V_{ac} 3-phase.

According to yet another aspect, a vehicle is provided. The vehicle includes an electric motor that moves the vehicle; a high-voltage (HV) electric battery supplying power to the electric motor to move the vehicle; a charging port configured to receive a first AC power from an external AC power source to charge the HV electric battery via a charging cable; an electrical outlet configured to supply electrical power to an external device; and an on-board charger (OBC) electrically coupled to the electrical outlet, the HV electric battery and the charging port. The OBC is bi-directional and the OBC has a converter configured to convert the first AC power received from the external AC power source into a first DC power and to supply the first DC power to the HV electric battery, the converter having a power factor correction (PFC) circuit that is single-phase and three-phase compatible and an inductor-inductor-capacitor (LLC) resonant converter configured to stabilize an output voltage of the PFC circuit based on a voltage requirement of the HV electric battery; and an inverter configured to receive a second DC power from the HV electric battery and to convert the second DC power into a second AC power that is supplied to the external device when the external device is electrically connected to the electrical outlet.

In an embodiment of this aspect, the external device is electrically connected to the electrical outlet by being plugged into a receptacle at the electrical outlet and the receptacle is affixed to the vehicle. In another embodiment of this aspect, the vehicle also has a user interface, and a controller electrically coupled to the OBC. In yet another embodiment of this aspect, the controller is configured to switch between a single-phase charge and a three-phase charge based on a user-input from the user interface. In another embodiment of this aspect, the controller is configured to automatically stop charging the electrical device when the HV electric battery is at or below a predetermined power threshold that is based on a user-input from the user interface. In another embodiment of this aspect, the controller is configured to enable and disable the inverter based on a user-input from the user interface. In another embodiment of this aspect, the electrical outlet is configured to output: up to 80 Amps per phase for a 120 V_{ac} single-phase; 240 V_{ac} for a split-phase; and up to 32 Amps per phase for a 208 V_{ac} 3-phase.

According to another aspect, a vehicle is provided. The vehicle includes an electric motor that moves the vehicle; a high-voltage (HV) electric battery supplying power to the electric motor to move the vehicle; a charging port configured to receive a first AC power from an external AC power source to charge the HV electric battery via a charging cable; an electrical outlet configured to supply electrical power to an external device; and an on-board charger (OBC) electrically coupled to the electrical outlet, the HV electric battery and the charging port. The OBC is bi-directional and the OBC has a converter configured to convert the first AC power received from the external AC power source into a first DC power and to supply the first DC power to the HV electric battery, the converter having a power factor correction (PFC) circuit that is single-phase and three-phase compatible and an inductor-inductor-capacitor (LLC) resonant converter configured to stabilize an output voltage of the PFC circuit based on a voltage requirement of the electric battery; and an inverter configured to receive a second DC power from the electric battery and to convert the second DC power into a second AC power that is supplied to the external device when the external device is electrically connected to the electrical outlet.

In an embodiment of this aspect, the external device is electrically connected to the electrical outlet by being plugged into a receptacle at the electrical outlet. In an embodiment of this aspect, the receptacle is affixed to the vehicle. In yet another embodiment of this aspect, the vehicle also has a user interface and a controller electrically coupled to the OBC, the controller being configured to switch between a single-phase charge and a three-phase charge based on a user-input from the user interface and the controller being configured to enable and disable the inverter based on a user-input from the user interface.

### BRIEF DESCRIPTION OF THE DRAWINGS

The foregoing and other features of the present disclosure will become more fully apparent from the following description and appended claims, taken in conjunction with the accompanying drawings. These drawings depict only several embodiments in accordance with the disclosure and are, therefore, not to be considered limiting of its scope.
FIG. 1 is a schematic diagram of a system according to an embodiment of the present disclosure;
FIG. 2 is a block diagram of the system according to another embodiment of the present disclosure;
FIG. 3 is a circuit diagram according to an embodiment of the present disclosure; and
FIG. 4 is a block diagram of the system according to yet another embodiment of the present disclosure.

In the following detailed description, various embodiments are described with reference to the appended drawings. The skilled person will understand that the accompanying drawings are schematic and simplified for clarity. Like reference numerals refer to like elements or components throughout. Like elements or components will therefore not necessarily be described in detail with respect to each figure.

### DETAILED DESCRIPTION

As described above, there is a need to provide improved techniques for supplying power to high power electric tools and equipment. The present disclosure provides an arrangement to output AC from a bi-directional on-board charger (OBC). In some embodiments, the OBC allows an upfitter to install plug receptables/sockets in the vehicle or to install custom AC solutions as needed. The OBC is a bi-directional OBC in which a common port can accommodate 1-phase or 3-phase charging. Accordingly, both lower power household electrical devices and higher power electrical devices can be charged and operated in an EV by tapping into the EV potential to output AC. The common port or electrical outlet can provide the following outputs: up to 80 Amperes (A) per phase for a 120 V_{ac} single-phase; 240 V_{ac} for a split-phase; and up to 32 A per phase for a 208 V_{ac} three-phase. The single-phase/split-phase or three-phase can be software configurable (automatically) to provide flexibility to vehicle operators. Vehicle control system can prevent the high voltage (HV) battery state of charge (SoC) from going too low (e.g., < 20%, software configurable). A human-machine interface (HMI) can allow an operator/user to selectively enable and disable the electrical device charging feature and can also be designed to provide feedback information to the operator/user.

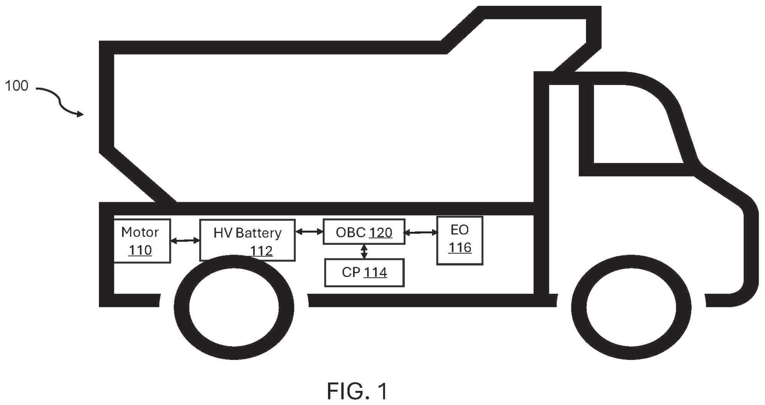

Referring to FIG. 1, an example vehicle 100 according to one embodiment of the present disclosure is described. The vehicle 100 includes an electric motor 110 that moves the vehicle 100, a HV battery 112 that supplies power to the electric motor 110 to propel or move the vehicle 100 and a charging port 114. The charging port 114 is configured to receive AC power from an external AC power source (not shown) to charge the HV battery 112 via a charging cable. External AC power sources may be a standard household wall socket/receptacle (typically 120 V, Level 1 charging) or a charging station (Level 2 or 3 charging). Other AC power sources may also be used to charge the HV battery 112.

The vehicle 100 further includes an electrical outlet 116 and an OBC 120. The electrical outlet 116 is configured to supply electrical power to an external device, such as a high-power tool, when the external device is electrically connected to the electrical outlet. The external device can be electrically connected to the electrical outlet 116 by being plugged into a receptacle, also referred to in the art as a socket.

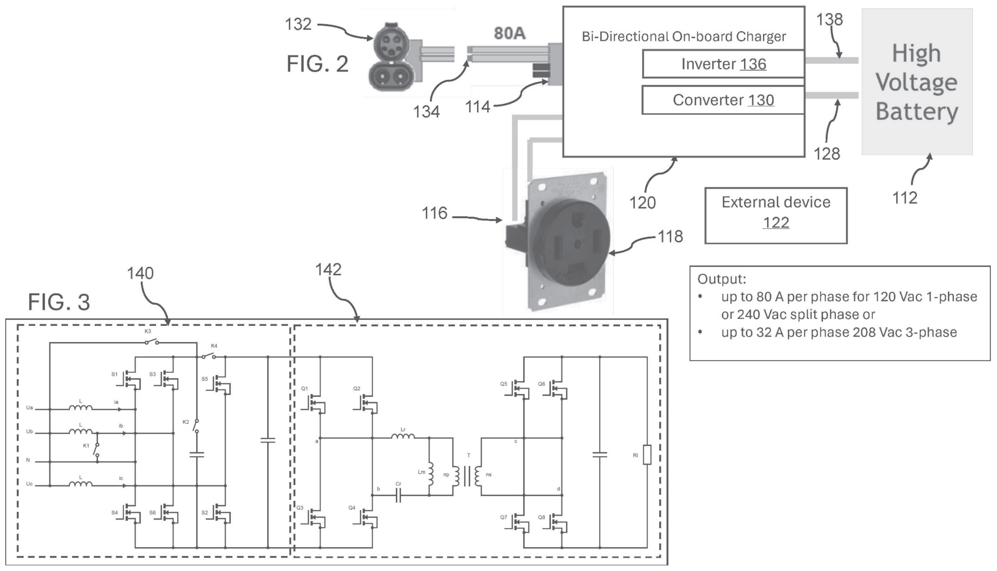

For clarity, as used herein, the "electrical outlet" refers to the point on a wiring system at which current is taken from the system to supply utilization equipment; in other words, it is where power is taken out of the system to be used by something external to the system. The term "receptacle" refers to a contact device installed at an electrical outlet for connection of an attachment plug; in other words, a receptacle is what physically receives the plug. FIG. 3 shows a receptacle 118 at the electrical outlet 116. Alternative embodiments may use other types of known receptacles. The receptacle 118 is affixed to the vehicle 100 at vehicle manufacturing or an upfitter can customize the vehicle 100 by installing a receptacle 118 at the electrical outlet 116 which is electrically coupled to the bi-directional OBC according to the present disclosure.

Referring to FIG. 2, an example diagram of the OBC 120, electrical outlet 116 and the electrical connections thereto are described according to one embodiment of the present disclosure. An external device 122, such as a high-power tool, can be plugged into the receptacle 118. The external device 122 includes a plug (not shown) at an end of a cord (not shown) that is shaped to mate with a female receptacle 118. The external device 122 can also be a low-power device. Advantageously, the OBC 120 circuit is configured to supply both single/split-phase charging in addition to three-phase charging for more demanding loads.

An OBC is a charger for an EV electric motor battery which is located "on-board" the EV, as opposed to "off-board" charger which are located outside the EV. OBCs are beneficial because they provide EV operators with the flexibility to charge the EV wherever a compatible electric power outlet is available. Also, OBCs generally provide better voltage matching, as compared to off-board chargers, since OBCs can be specifically designed to meet the specific voltage requirements of the battery inside the EV; whereas off-board chargers are generally designed to support a wide range of EV battery voltages. On the other hand, OBCs add additional weight to an EV and off-board chargers are more able to be designed with very high-power dense converter systems for faster Level 3 charging.

For clarity, as used herein, the term "converter" is used to refer to an electrical circuit that turns AC power into DC power or DC-DC. The term "inverter" is used to refer to an electrical circuit that transforms DC power into AC power.

Referring again to FIG. 2, the OBC 120 is also electrically coupled to the HV battery 112 and a charging port 114. The OBC 120 is electrically coupled to the HV battery 112 via a DC bus 128 over which DC power is supplied to charge the HV battery 112. The OBC 120 has a converter 130 that is configured to convert AC power received from an external AC power source 132 (via a charging cable 134) into DC power to charge the HV battery 112.

The OBC 120 is bi-directional. Thus, in addition to charging the HV battery 112, the OBC 120 of the present disclosure includes an inverter 136 that is configured to receive DC power stored at the HV battery 112 via a DC bus 138 and to convert the received DC power into AC power that can be supplied to the external device 122 when the external device 122 is electrically connected to the electrical outlet 116. The AC power supplied to the electrical outlet 116 outputs up to 80 Amps per phase for a 120 V_{ac} single-phase; 240 V_{ac} for a split-phase; and up to 32 Amps per phase for a 208 V_{ac} 3-phase.

FIG. 3 shows an example circuit diagram. The circuit diagram shows a power factor correction (PFC) circuit 140 that is single-phase and three-phase compatible and an inductor-inductor-capacitor (LLC) resonant converter 142 (i.e., full-bridge LLC resonant converter) configured to stabilize an output voltage of the PFC circuit based on a voltage requirement of the particular HV battery 112 in the vehicle. Advantageously, the circuit is configured to both charge the HV battery and convert DC to AC to charge an external device, such as a high-power tool.

In some embodiments, an HMI is provided to allow an operator/user of the EV to selectively switch between a single-phase and a three-phase charge or to selectively enable and disable the inverter. The HMI can also be configured to automatically stop charging the electrical device when the SoC of the HV electric battery reaches or falls below a power threshold that is selectable by the operator/user.

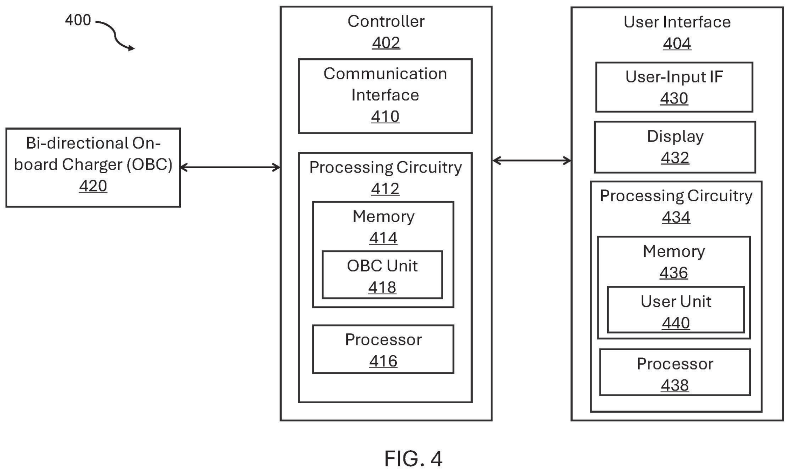

Referring to FIG. 4, one example implementation of an HMI in vehicle 400 is described. The vehicle 400 includes a controller 402, a user interface 404 and a bi-directional OBC 420 according to the present disclosure.

The controller 402 includes a communication interface 410 and processing circuitry 412. The communication interface 410 is configured to set up and maintain a wired or wireless connection with the OBC 420 and user interface 404. The processing circuitry 412 includes memory 414 and one or more processors 416. The processing circuitry 412 and/or processors 416 may be, for example, a central processing unit (CPU), field programmable gate away (FPGA), application-specific integrated circuitry (ASIC) and the like. The memory 414 may include any kind of volatile and/or nonvolatile memory, e.g., cache, buffer memory, random access memory (RAM), read only memory (ROM) and the like. The memory 414 includes an OBC unit 218 which has computer instructions that, when executed by the processor 416, causes the processor 416 to perform the methods and techniques described herein such as allowing an operator/user of the EV to selectively switch between charging modes, setting a SoC threshold, enabling/disabling bi-directional charging of external devices and the like, as described herein.

Referring to FIG. 4, the user interface 404 can be, for example, a touchscreen computer, which allows a user to enter user-input. The user interface 404 includes a user-input interface (IF) 430, such as for example a touchscreen, keypad, buttons, audio input interface (microphone), and the like. The user interface 404 includes a user display 432 that displays information to the user, such as a current SoC threshold, a current charging mode, etc. The user interface 404 includes a communication interface (not shown) and processing circuitry 434. The communication interface is configured to set up and maintain a wired connection with the OBC 420 and possibly a wireless connection (e.g., radio transceivers) to a wide area network (WAN) such as the Internet. The processing circuitry 434 includes memory 436 and one or more processors 438. The processing circuitry 434 and/or processors 438 may be, for example, a central processing unit (CPU), field programmable gate away (FPGA), application-specific integrated circuitry (ASIC) and the like. The memory 436 may include any kind of volatile and/or nonvolatile memory, e.g., cache, buffer memory, random access memory (RAM), read only memory (ROM) and the like. The memory 436 includes a user unit 440 which has computer instructions that, when executed by the processor 438, causes the processor 438 to perform the methods and techniques described herein.

The user unit 440 in user interface 404 has computer instructions to cause the processor 438 to receive and interpret user-input from the user-input IF 430 and instruct the controller 402 accordingly. The OBC unit 418 in the controller 402 has computer instructions to cause processor 416 to cause OBC 420 to switch between a single-phase charge and a three-phase charge based on a user-input from the user interface 404. The OBC unit 418 in the controller 402 has computer instructions to cause processor 416 to cause OBC 420 to automatically stop charging the electrical device when the HV electric battery is at or below a predetermined power threshold which is based on a user-input from the user interface 404. The OBC unit 418 in the controller 402 has computer instructions to cause processor 416 to cause OBC 420 to enable and disable the inverter based on a user-input from the user interface 404.

### INDUSTRIAL APPLICABILITY

A vehicle is disclosed including an electric motor that moves the vehicle; a high-voltage (HV) electric battery supplying power to the electric motor to move the vehicle; a charging port configured to receive a first AC power from an external AC power source to charge the HV electric battery via a charging cable; an electrical outlet configured to supply electrical power to an external device; and an on-board charger (OBC) electrically coupled to the electrical outlet, the HV electric battery and the charging port, the OBC comprising: a converter configured to convert the first AC power received from the external AC power source into a first DC power and to supply the first DC power to the HV electric battery; and an inverter configured to receive a second DC power from the HV electric battery and to convert the second DC power into a second AC power that is supplied to the external device when the external device is electrically connected to the electrical outlet. The system can be manufactured in industry for use on vehicles purchased by consumers.

Numerous modifications to the present invention will be apparent to those skilled in the art in view of the foregoing description. It is not desired to limit the invention to the exact construction and operation shown and described, and accordingly, all suitable modifications and equivalents may be resorted to, falling within the scope of the invention. Accordingly, this description is to be construed as illustrative only of the principles of the invention and is presented for the purpose of enabling those skilled in the art to make and use the invention and to teach the best mode of carrying out same. The exclusive rights to all modifications which come within the scope of the appended claims are reserved. All patents, patent publications and applications, and other references cited herein are incorporated by reference herein in their entirety.

## Claims

1. A vehicle comprising:
an electric motor that moves the vehicle;
a high-voltage (HV) electric battery supplying power to the electric motor to move the vehicle;
a charging port configured to receive a first AC power from an external AC power source to charge the HV electric battery via a charging cable;
an electrical outlet configured to supply electrical power to an external device; and
an on-board charger (OBC) electrically coupled to the electrical outlet, the HV electric battery and
the charging port, the OBC comprising:
a converter configured to convert the first AC power received from the external AC power source into a first DC power and to supply the first DC power to the HV electric battery; and
an inverter configured to receive a second DC power from the HV electric battery and to convert the second DC power into a second AC power that is supplied to the external device when the external device is electrically connected to the electrical outlet.

2. The vehicle of Claim 1, wherein the OBC is bi-directional.

3. The vehicle of Claim 2, wherein the converter comprises a power factor correction (PFC) circuit that is single-phase and three-phase compatible and an inductor-inductor-capacitor (LLC) resonant converter configured to stabilize an output voltage of the PFC circuit based on a voltage requirement of the HV electric battery.

4. The vehicle of Claim 1, wherein the external device is electrically connected to the electrical outlet by being plugged into a receptacle at the electrical outlet and the receptacle is affixed to the vehicle.

5. The vehicle of Claim 1, further comprising a user interface and a controller electrically coupled to the OBC.

6. The vehicle of Claim 5, wherein the controller is configured to switch between a single-phase charge and a three-phase charge based on a user-input from the user interface.

7. The vehicle of Claim 5, wherein the controller is configured to automatically stop charging the electrical device when the HV electric battery is at or below a predetermined power threshold that is based on a user-input from the user interface.

8. The vehicle of Claim 5, wherein the controller is configured to enable and disable the inverter based on a user-input from the user interface.

9. The vehicle of Claim 1, wherein the electrical outlet is configured to output:
up to 80 Amps per phase for a 120 V_{ac} single-phase;
240 V_{ac} for a split-phase; and
up to 32 Amps per phase for a 208 V_{ac} 3-phase.

10. A vehicle comprising:
an electric motor that moves the vehicle;
a high-voltage (HV) electric battery supplying power to the electric motor to move the vehicle;
a charging port configured to receive a first AC power from an external AC power source to charge the HV electric battery via a charging cable;
an electrical outlet configured to supply electrical power to an external device; and
an on-board charger (OBC) electrically coupled to the electrical outlet, the HV electric battery and
the charging port, the OBC being bi-directional and the OBC comprising:
a converter configured to convert the first AC power received from the external AC power source into a first DC power and to supply the first DC power to the HV electric battery, the converter having a power factor correction (PFC) circuit that is single-phase and three-phase compatible and an inductor-inductor-capacitor (LLC) resonant converter configured to stabilize an output voltage of the PFC circuit based on a voltage requirement of the electric battery; and
an inverter configured to receive a second DC power from the electric battery and to convert the second DC power into a second AC power that is supplied to the external device when the external device is electrically connected to the electrical outlet.

11. The vehicle of Claim 10, wherein the external device is electrically connected to the electrical outlet by being plugged into a receptacle at the electrical outlet.

12. The vehicle of Claim 12, wherein the receptacle is affixed to the vehicle.

13. The vehicle of Claim 10, further comprising a user interface and a controller electrically coupled to the OBC, the controller being configured to switch between a single-phase charge and a three-phase charge based on a user-input from the user interface and the controller being configured to enable and disable the inverter based on a user-input from the user interface.
